# EUROPÄISCHE PATENTSCHRIFT

(11) **EP 0 580 086 B1**
(45) Veröffentlichungstag und Bekanntmachung des Hinweises auf die Patenterteilung: **26.04.1995**
(21) Anmeldenummer: 93111422.7
(22) Anmeldetag: 16.07.1993
(51) Int. Cl.: G09B 9/04

(54) **Anlage zum Simulieren von Winkelbeschleunigungen und dergleichen für die Insassen eines Kraftfahrzeuges**
Simulation system for angular accelerations and the like affecting the passengers of a motor-vehicle
Installation pour la simulation des accélérations angulaires et similaires affectant les passagers d'un véhicule

(30) Priorität: 20.07.1992 DE 4223837
(43) Veröffentlichungstag der Anmeldung: 26.01.1994
(73) Patentinhaber: Landmann, Reinhard, D-53177 Bonn (DE); STERZER & HENGSBERG HOLDING GmbH, D-53501 Grafschaft (DE)
(72) Erfinder: Landmann, Reinhard, D-53177 Bonn (DE); Hengsberg, Helmut, D-53501 Grafschaft (DE)
(74) Vertreter: Berkenfeld, Helmut, Dipl.-Ing.

(56) Entgegenhaltungen:
- DE-A- 2 842 409
- DE-A- 4 138 252
- DE-U- 8 602 953
- DE-U- 9 209 735
- DE-U- 9 210 575

## Beschreibung

Die Erfindung betrifft eine Anlage zum Simulieren von Winkelbeschleunigungen und dergleichen für die Insassen eines Kraftfahrzeuges mit einem Rollgestell zur Aufnahme und Halterung des Kraftfahrzeuges und zu dessen Drehung um die Längsachse.

Eine Vorrichtung zum Schwenken, Drehen und Kippen einer Kraftfahrzeugkarosserie ist bekannt (DE-A-3 703 522 und DE-U-8 602 953). Diese bekannte Vorrichtung enthält einen Rahmen mit vertikal verlaufenden Stützen, wobei dieser Rahmen und die Stützen im weiteren Sinne als Rollgestell angesehen werden können, und an den Stützen angeordnete Lager zur Aufnahme und Halterung eines Kraftfahrzeuges. In und mit dieser Vorrichtung wird ein Kraftfahrzeug um seine Längsachse gedreht. Dies erfolgt, während ein Fahrer und gegebenenfalls auch Beifahrer angeschnallt auf ihren Sitzen sitzen. Die Vorrichtung läßt sich in jeder Drehstellung des Kraftfahrzeugs anhalten und arretieren. Der Fahrer und gegebenenfalls die Beifahrer erleben dann wirklichkeitsnah die Stellung, die sie bei einem Kippen des Kraftfahrzeuges um seine Längsachse, bei einem Überschlag und/oder bei einem Liegenbleiben auf einer Seite oder dem Dach des Fahrzeuges erleben würden. Sie können erlernen, wie sie in einer solchen Lage ihre Anschnallgurte lösen und das Kraftfahrzeug verlassen können. Mit dieser Vorrichtung können ein Fahrer und die Beifahrer somit die Lage erfahren, die sie und das Kraftfahrzeug nach einem Kippen, Überschlagen oder dergleichen einnehmen. Das Kippen, Überschlagen oder dergleichen erfahren sie nur annähernd durch das langsame Drehen des Kraftfahrzeuges um dessen Längsachse. Sie erfahren damit nicht diejenigen Kräfte, Beschleunigungen und Verzögerungen und auch den seelischen Schock, denen sie bei einem Kippen oder Überschlagen selbst ausgesetzt sind.

Bekannt ist ein Flug- und Fahrsimulator (DE 41 38 252 A1), mit dem die Lage der Kabine eines schnellen Flugzeuges und die bei Lageänderungen auf den Piloten einwirkenden Kräfte simuliert werden sollen. Bei diesem Simulator ist das Cockpit bzw. der zu simulierende Raum kardanisch gelagert und damit um sämtliche drei Raumachsen beweglich. Die kardanische Lagerung läßt sich ihrerseits entlang von zwei Schienen hin- und herfahren. Diese Schienen haben eine Länge von einigen Metern. Ihre Enden werden auf einer Kreisbahn geführt. Damit kann man die Schienen bzw. die kardanische Lagerung bzw. den zu simulierenden Raum zusätzlich noch um eine weitere Achse drehen. Bekannt ist schließlich noch ein in einer Zentrifuge gelagerter Bewegungssimulator (US-PS 3 196 557). Mit diesem Simulator sollen die in einem Flugzeug oder Raumfahrzeug auftretenden Bewegungen und die auf den Piloten einwirkenden Kräfte simuliert werden. Ein Ausleger ist mit seinem einen Ende unter einem Winkel von 90 mit einer Welle verbunden. Diese ist mit hoher Drehzahl drehbar und stellt die Zentrifuge dar. Am anderen freien Ende des Auslegers ist eine das Cockpit darstellende Kapsel kardanisch gelagert. Diese Lagerung ist nicht fest. Sie ermöglicht eine Verschiebung in mehreren Richtungen. Das heißt, daß ein in der Kapsel befindlicher Pilot durch Drehen der Welle hohen Fliehkräften ausgesetzt werden kann. Weiter kann er gegenüber dieser Welle verschiedene Lagen einnehmen. Dies bedeutet wieder, daß die Fliehkräfte in verschiedenen Richtungen oder aus verschiedenen Richtungen auf den Piloten einwirken können.

Nicht nur Sondereinsatzkräfte der Polizei, Berufsfahrer und sogenannte Cheffahrer, sondern auch normale Autofahrer haben erkannt, daß sie bei Unfällen physisch und psychisch stark und vor allen Dingen in ungewohnter Weise belastet werden und damit stark gefährdet sind. Die Fahrer aus allen diesen Gruppen, ihre Ausbilder und Arbeitgeber suchen daher nach Möglichkeiten, das richtige Verhalten unter diesen Bedingungen zu üben. Hier setzt die Erfindung ein. Ihr liegt die Aufgabe zugrunde, eine Anlage zu finden, mit der Winkelbeschleunigungen simuliert und das richtige Verhalten von Fahrer und Beifahrer bei diesen Winkelbeschleunigungen erlernt werden kann. Diesen Winkelbeschleunigungen können sich Beschleunigungen entlang einer geraden Linie überlagern. Die Lösung für diese Aufgabe ergibt sich bei einer Anlage der eingangs genannten Gattung gemäß der Erfindung dadurch, daß das Rollgestell an seinen beiden Enden je einen inneren und einen äußeren Drehkranz aufweist, die gegeneinander verdrehbar sind, das Kraftfahrzeug im inneren Drehkranz aufnehm- und befestigbar ist und das Rollgestell auf einem Schienenstrang verfahrbar ist. Das Rollgestell läßt sich als ein großes Rhönrad ansehen. Bei dem ein Sportgerät darstellenden Rhönrad stellt sich ein Mensch in dieses Rhönrad und hält sich an diesem mit Füßen und Händen fest. Das bei der erfindungsgemäßen Anlage verwandte Rollgestell ist jedoch so groß, daß man mit einem Kraftfahrzeug in es hineinfahren kann und es das Kraftfahrzeug dann auf dem größeren Teil von dessen Länge umschließt. Wie ein Mensch sich in einem Sport-Rhönrad um eine Achse drehen kann, kann sich ein in das Rollgestell eingebrachtes und in diesem befestigtes Kraftfahrzeug um seine Längsachse drehen. Dabei wirken Winkelbeschleunigungen auf Fahrer und Beifahrer ein. Innerhalb der erfindungsgemäßen Anlage läßt sich das Rollgestell auf einem Schienenstrang hin- und herfahren. Dabei treten weitere auch auf Fahrer und Beifahrer einwirkende Beschleunigungen auf.

In einer zweckmäßigen Ausgestaltung enthält die Anlage zusätzlich einen auf dem Schienenstrang verfahrbaren Fahrschemel, auf dem eine Drehscheibe angeordnet ist, die ihrerseits das Rollgestell trägt. Mit Hilfe dieser Drehscheibe kann der Winkel, den das Rollgestell gegenüber dem Schienenstrang einnimmt, verändert werden. Damit wirken die Linear- und Winkelbeschleunigungen, die beim Fahren des Fahrschemels auf dem Schienenstrang auf Fahrer und Beifahrer einwirken, unter einem anderen Winkel auf diese ein. Man hat es somit in der Hand, die durch das Fahren auf dem Schienenstrang entstehenden Beschleunigungen unter verschiedenen Winkeln auf Fahrer und Beifahrer einwirken zu lassen.

Zweckmäßig ist das Kraftfahrzeug mit Federn im inneren Drehkranz aufhängbar. Damit kann das Kraftfahrzeug mit geringem Kraftaufwand und innerhalb vernünftiger Grenzen mit fast beliebiger Geschwindigkeit um seine Längsachse gedreht werden. Damit werden Winkelgeschwindigkeiten und Fliehkräfte auf die Insassen ausgeübt.

Aus konstruktiven Gründen und zum Erhöhen der Stabilität weist das Rollgestell zwischen den Drehkränzen verlaufende Längsstreben auf.

In einer zweckmäßigen Ausführungsform verläuft unterhalb des aufgehängten Kraftfahrzeuges eine Längsführung parallel zu den genannten Längsstreben. An dieser Längsführung wird ein Gewicht verschieb- und feststellbar geführt. Zusätzlich kann eine Querführung parallel zu den auf der Drehscheibe angeordneten Querführungen unterhalb des aufgehängten Kraftfahrzeuges verlaufen. Auch an dieser Querführung wird ein Gewicht verschieb- und feststellbar geführt. Schließlich kann noch eine Vertikalführung an einer Stirnseite des Rollgestelles verlaufen, die am inneren Drehkranz befestigt ist und entlang der ein Gewicht verschieb- und feststellbar ist.

In dem im inneren Drehkranz aufgehängten Kraftfahrzeug können eine bis vier Personen sitzen. Die Zahl, das Gewicht und die Lage dieser Personen bestimmen den gemeinsamen Schwerpunkt von Kraftfahrzeug und innerem Drehkranz. Abhängig von diesen Parametern wird mit den Gewichten der gemeinsame Schwerpunkt so eingestellt, daß der innere Drehkranz mit dem Kraftfahrzeug und den in diesem sitzenden Personen bei aufrechter normaler Sitzhaltung dieser Personen eine stabile Lage einnimmt.

In einer weiteren Ausführungsform ist oberhalb des aufgehängten Kraftfahrzeuges am inneren Drehkranz ein Führungsrahmen befestigt, an dem ein weiteres Gewicht verschieb- und feststellbar gehalten ist. In den beiden Endstellungen des Gewichtes sind am Führungsrahmen Puffer vorgesehen. Am Führungsrahmen befindet sich weiter noch eine Mittenarretierung für das Gewicht.

In einer weiteren zweckmäßigen Ausgestaltung enthält der Schienenstrang ein Kurvenstück. Falls dieses Kurvenstück genügend lang ist und mit ausreichend hoher Geschwindigkeit durchfahren wird, werden auf die Insassen des Kraftfahrzeugs weitere Winkelbeschleunigungen und Fliehkräfte ausgeübt.

Die Erfindung sieht noch eine weitere Ausführungsform vor, die gekennzeichnet ist durch eine Anhöhe mit einem von dieser ausgehenden Ablaufberg und einer sich an diesen anschließenden Plattform, mit von zwei Seiten der Plattform unter rechten Winkeln zu dem Ablaufberg ausgehenden Gefällestrecken und mit auf dem Ablaufberg und den Gefällestrecken angeordneten Schienen, auf denen der Fahrschemel verfahrbar ist beziehungsweise das Rollgestell rollen kann. Auf der Anhöhe ist zweckmäßig eine Seilwinde mit einem Seilzug angeordnet, an der das Rollgestell bzw. der Fahrschemel befestigt sind. Mit dieser Seilwinde kann das Rollgestell unter der Einwirkung seines Eigengewichtes den Ablaufberg gesteuert hinabfahren. Beim Erreichen der Plattform stößt der Fahrschemel an einen dort vorgesehenen Prellbock. Hier löst sich das Rollgestell mit dem Kraftfahrzeug vom Fahrschemel. Es rollt unter der Einwirkung seines Eigengewichtes die eine oder die andere Gefällestrecke herab. Auch hierbei werden die Insassen des Kraftfahrzeuges Beschleunigungen ausgesetzt.

Bei einer weiteren Ausführungsform soll sich das Rollgestell nach seiner Fahrt auf dem Fahrschemel von diesem lösen und ohne diesen seitlich rollen. Hierzu ist in einer zweckmäßigen Ausgestaltung vorgesehen, daß am Ende des Schienenstranges ein Prellbock und hinter diesem in der Verlängerung des Schienenstranges auf der Höhenlage der Drehscheibe eine Anhöhe angeordnet und das Rollgestell von der Drehscheibe lösbar ist, so daß dieses nach dem Auftreffen des Fahrschemels sich von diesem löst und auf der Anhöhe rollt. Dabei ist auf der Drehscheibe eine Platte zur Auflagerung des inneren Drehkranzes angeordnet, während an der Seite der Platte Stützhebel zu dessen Fixierung verschwenkbar angelenkt sind. Auf der Platte und an der Innenseite der Stützhebel sind zusätzlich Laufrollen angebracht. An diesen liegt das Rollgestell an. Zweckmäßig steht der eine Stützhebel unter dem Druck einer ihn gegen das Rollgestell drückenden Feder, während der andere Stützhebel feststellbar ist und an seinem freien Ende eine Verlängerung aufweist. Am Schienenstrang ist weiter eine Einrichtung zum automatischen Drehen der Drehscheibe bei Vorbeilauf des Fahrschemels angeordnet. Im einzelnen ist vorgesehen, daß seitlich des Schienenstranges eine Auslösevorrichtung ortsfest und am Fahrschemel eine mit dieser zusammenwirkende Sperrklaue drehbar angeordnet ist, in der Drehscheibe eine Aussparung mit einer Anschlagfläche zur Anlage der Sperrklaue ausgebildet und der Seilzug außermittig an der Drehscheibe derart befestigt ist, daß beim Vorbeilauf des Fahrschemels an der Auslösevorrichtung diese die Sperrklaue aus der Aussparung und von der Anschlagfläche löst und der Seilzug die Drehscheibe mit dem auf dieser befindlichen Rollgestell um 90° dreht.

Die bei der erfindungsgemäßen Anlage auftretenden Kräfte können so groß werden, daß sich die Türen des Kraftfahrzeugs von selbst öffnen. Um dies zu verhindern, ist eine weitere Ausgestaltung vorgesehen, die gekennzeichnet ist durch am Rollgestell schwenkbar gelagerte Hebel, die in einer Ruhestellung die Türen des Kraftfahrzeuges zum Öffnen freigeben und in einer Betriebsstellung vor diese geschwenkt sind, und eine am Rollgestell verschiebbar geführte und mit den Hebeln verbundene Stellstange zu deren Schwenken in die eine oder die andere Stellung.

Nach dem Abrollen des Rollgestells auf dem Boden soll dieses in einer bestimmten Lage gehalten werden. Hierzu dienen in einer weiteren Ausgestaltung am inneren Drehkranz schwenk- und feststellbar angebrachte Keile, die den inneren Drehkranz in eingeschwenkter Stellung zum Rollen freigeben und in ausgeschwenkter Stellung am Rollen hindern.

Eine weitere Ausgestaltung ist gekennzeichnet durch einen unter dem Dach des Kraftfahrzeuges angebrachten aufblasbaren Luftsack. Mit diesem kann den Insassen des Kraftfahrzeugs ein eingedrücktes Fahrzeugdach vorgetäuscht werden.

Ein motorischer Antrieb zum Drehen des Rollgestells um seine Längsachse ist bekannt (DE 92 10 576 U1). Dieser bekannte Antrieb enthält ein im Rollgestell exzentrisch gelagertes Gewicht mit einem motorischen Antrieb zum Verschwenken dieses Gewichtes. Der motorische Antrieb dreht das Gewicht in eine labile Lage. Beim Lösen von Keilen will das Gewicht seine stabile Ruhelage einnehmen. Die hierbei auftretenden Kräfte werden auf das Rollgestell übertragen. Bei der bekannten Anordnung erfolgt dies ruckartig. Dies führt zu ruckartigen Dreh- und Schaukelbewegungen des Rollgestells. Zum Vermeiden solcher ruckartigen Bewegungen sieht die Erfindung im einzelnen vor, daß das Ritzel des Motors über Kettenstränge mit einem Zahnrad gekuppelt ist, die Kettenstränge durch Kettenspanner elastisch vorgespannt sind und das Zahnrad über Stoßdämpfer mit dem Rollgestell verbunden ist.

Am Beispiel der in der Zeichnung gezeigten Ausführungsformen wird die Erfindung nun weiter beschrieben. In der Zeichnung ist:
- Fig. 1: eine perspektivische Darstellung der ersten Ausführungsform der Erfindung mit einem ein Kurvenstück enthaltenden Schienenstrang,
- Fig. 2: eine Seitenansicht der in Fig. 1 gezeigten Ausführungsform,
- Fig. 3: eine Stirnansicht der ersten Ausführungsform,
- Fig. 4: eine perspektische Ansicht eines Führungsrahmens und eines auf diesem verschiebbaren Gewichtes,
- Fig. 5: eine schematische perspektivische Ansicht einer zweiten Ausführungsform der Erfindung,
- Fig. 6: eine schematische Seitenansicht einer weiteren Ausführungsform der Erfindung,
- Fig. 7: eine Seitenansicht der in Fig. 6 gezeigten Ausführungsform nach Drehung des Drehschemels um 90° und in strichpunktierten Linien die Darstellung eines auf der Anhöhe abrollenden Rollgestells,
- Fig. 8: eine schematische Seitenansicht einer weiteren Ausführungsform der Erfindung, bei der die Schienenstrecke ein Gefälle in Richtung auf die Anhöhe aufweist,
- Fig. 9: eine schematische Seitenansicht der in Fig. 8 gezeigten Ausführungsform nach Drehung des Drehschemels um 90°,
- Fig.10: eine Aufsicht auf die in den Figuren 8 und 9 gezeigte Ausführungsform,
- Fig.11: die schematische Seitenansicht einer weiteren Ausführungsform mit einer Verriegelung der Türen des Kraftfahrzeuges,
- Fig.12: eine Stirnansicht auf eine weitere Ausführungsform des Rollgestells mit dieses in einer Ruhelage arretierenden Keilen,
- Fig.13: eine Teil-Seitenansicht der in Fig. 12 gezeigten Ausführungsform des Rollgestells,
- Fig.14: eine schematische Teil-Seitenansicht einer besonderen Ausführungsform des Kraftfahrzeuges,
- Fig.15: eine Stirnansicht, teilweise entlang der Schnittlinie XV - XV in Fig. 11, eines Antriebes zum Drehen des Rollgestells und
- Fig.16: ein Längsschnitt durch die in Fig. 15 gezeigte Ausführungsform des Antriebes entlang der Schnittlinie XVI - XVI in Fig. 15.

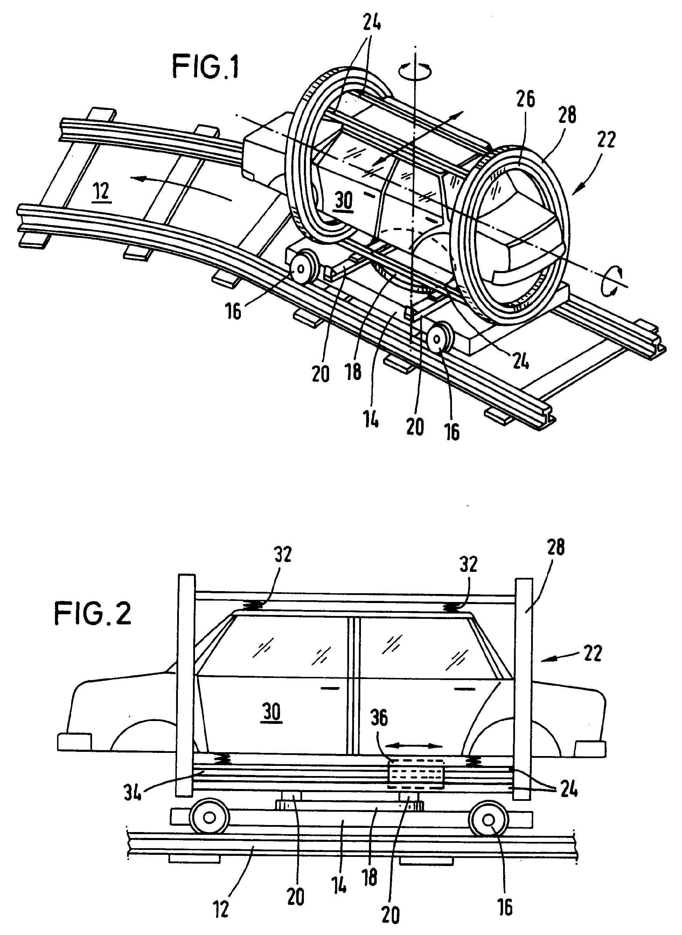

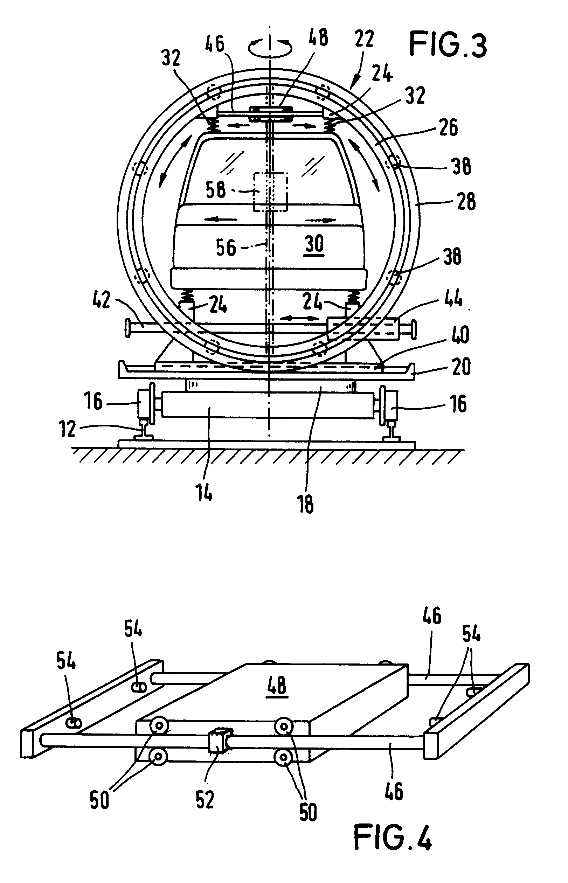

Die Figuren 1 bis 3 zeigen den Schienenstrang 12. Auf diesem fährt der Fahrschemel 14 mit seinen Rädern 16. Auf dem Fahrschemel 12 ist die Drehscheibe 18 angeordnet. Sie kann um die in die Figuren 1 und 3 in strichpunktierten Linien eingezeichnete vertikale Achse gedreht werden. Auf der Drehscheibe 18 sind zwei Querführungen 20 angeordnet. Die Figuren zeigen auch das Rollgestell 22 mit den Längsstreben 24, dem inneren Drehkranz 26 und dem äußeren Drehkranz 28. Im inneren Drehkranz 26 ist das Kraftfahrzeug 30 mit Federn 32 aufgehängt. Fig. 2 zeigt noch die Längsführung 34. Sie verläuft über der gesamten Länge des Rollgestells 22 parallel zu dessen Längsstreben 24. Ein Gewicht 36 ist auf der Längsführung 34 verschiebbar. Gemäß der Darstellung in Fig. 3 sind die beiden Drehkränze 26 und 28 über Rollen oder Kugeln 38 gegeneinander verdrehbar. Fig. 3 zeigt auch den in der Querführung 20 geführten Querschlitten 40. Auf ihm stützt sich das Rollgestell 22 ab. Fig. 3 zeigt weiter eine Querführung 42, auf der ein Gewicht 44 verschiebbar ist. Die Querführung 42 und das Gewicht 44 entsprechen der Längsführung 34 mit dem auf dieser geführten Gewicht 36. Figur 3 zeigt auch noch den oberhalb des Kraftfahrzeuges 30 am inneren Drehkranz 26 befestigten Führungsrahmen 46. Figur 4 zeigt dessen Einzelheiten. Das Gewicht 48 ist entlang ihm auf Rollen 50 geführt. Eine Mittenarretierung 52 fixiert das Gewicht 48 in seiner mittleren Lage. Puffer 54 dämpfen das Anschlagen des Gewichtes 48 in seinen Endstellungen.

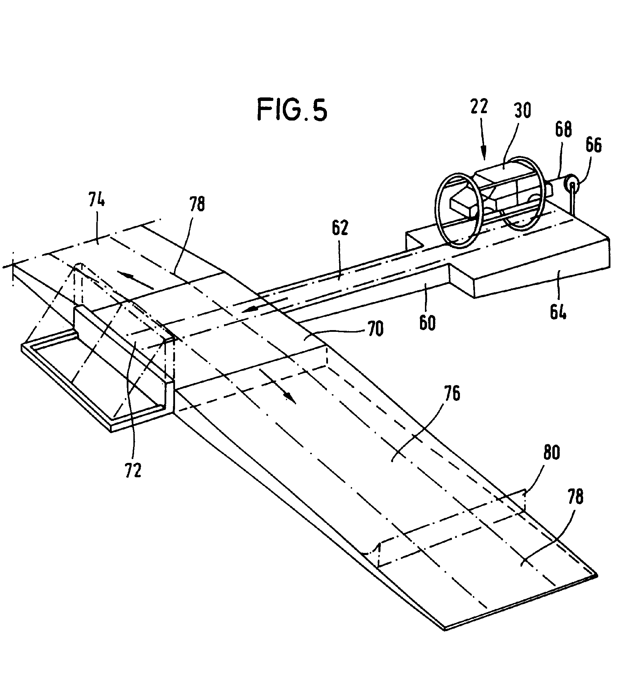

Fig. 5 zeigt die zweite Ausführungsform mit dem Ablaufberg 60, den auf diesem verlegten Schienen 62, der Anhöhe 64 und der Plattform 70. Zu deren beiden Seiten und unter 90° zu dem Ablaufberg 60 verlaufen die beiden Gefällestrecken 74 und 76. Auf diesen sind die Schienen 78 verlegt. Auf der in Fig. 5 linken Seite der Plattform 70 befindet sich ein Prellbock 72. Fig. 5 zeigt weiter noch eine Seilwinde 66 mit einem Seilzug 68. Die Seilwinde 66 ist auf der Anhöhe 64 angeordnet. Sie dient zum Verfahren des Rollgestells 22 mit dem Kraftfahrzeug 30 auf dem Ablaufberg 60. Auf der Gefällestrecke 78 ist noch eine Rampe 80 angeordnet.

Nach dieser Einzelbeschreibung können nun die Betriebsabläufe geschildert werden:

Das Kraftfahrzeug 30 wird in das Rollgestell 22 eingebracht. Mit den Federn 32 wird es am inneren Drehkranz 26 aufgehängt und befestigt. Der Fahrer, gegebenenfalls ein Beifahrer und auch Fahrgäste für die hintere Sitzbank steigen in das Kraftfahrzeug 30 ein. Abhängig von der Zahl, dem Gewicht und der Verteilung dieser Personen auf die verschiedenen Sitzplätze werden das Gewicht 36 entlang der Längsführung 34, das Gewicht 44 entlang der Querführung 42 und das Gewicht 58 entlang der Vertikalführung 56 verschoben. Diese Gewichte werden so verschoben, daß sich der gemeinsame Schwerpunkt von Kraftfahrzeug 30 und Personen möglichst genau in der Mitte befindet. Dann ist die Anordnung austariert und befindet sich im stabilen Gleichgewicht. Nun entscheidet ein Trainer, welche Bewegungsabläufe vorgenommen und welche Beschleunigungen, Winkelbeschleunigungen und Kräfte auf die Insassen des Kraftfahrzeuges einwirken sollen. Einfache Fliehkräfte wirken bei Verdrehen des inneren Drehkranzes 26 gegenüber dem äußeren Drehkranz 28 auf die Insassen des Kraftfahrzeuges 30 ein. Fliehkräfte um eine andere Achse wirken bei Drehen des Rollgestells 22 um die Achse der Drehscheibe 18 auf die Insassen des Kraftfahrzeuges 30 ein. Gleichzeitig mit der Drehung des Kraftfahrzeuges 30 um die Horizontal- oder Vertikalachse kann der Fahrschemel 14 entlang des Schienenstranges 12 verschoben werden. Bei Durchlaufen des Kurvenstückes entstehen dann weitere auf die Insassen des Kraftfahrzeuges 30 einwirkende Fliehkräfte. Diese können von der Seite, von vorne oder auch von hinten auf die Insassen des Kraftfahrzeugs 30 einwirken. Hierzu wird das Rollgestell 22 gegenüber der Drehscheibe 18 verdreht und in der einmal eingestellten Drehstellung fixiert. Zu Beginn einer Übung wird man die Insassen des Kraftfahrzeuges 30 nur einer Beschleunigung oder Fliehkraft aussetzen. Im weiteren Verlauf einer Übung kann man sie stärker belasten und damit mehreren Beschleunigungen und Fliehkräften gleichzeitig aussetzen.

Bei der in Fig. 5 schematisch dargestellten zweiten Ausführungsform läuft das Rollgestell 22 mit dem Kraftfahrzeug 30 auf dem Fahrschemel 14 zu Beginn einer Übung den Ablaufberg 60 herab. Der Fahrschemel 14 ist nicht dargestellt. Die Geschwindigkeit dieser Abwärtsbewegung läßt sich mit der Seilwinde 66 regulieren. Während dieser Abwärtsbewegung kann sich das Kraftfahrzeug 30 um seine Längsachse drehen. Während dieser Abwärtsbewegung kann das Kraftfahrzeug 30 auch um 90° gegenüber der in Fig. 5 gezeigten Lage verdreht sein. Hierzu wird die Drehscheibe 18 zu Beginn einer Übung um 90° gedreht und in dieser Stellung fixiert. Die Bewegung auf dem Ablaufberg 60 endet mit dem Anstoßen des nicht eingezeichneten Fahrschemels 14 am Prellbock 72. Das Rollgestell 22 wird nun vom Fahrschemel 14 gelöst. Anschließend wird es die Gefällestrecke 74 oder 76 hinunterrollen. Dabei wird es auf den Schienen 78 geführt. Dieses Hinunterrollen entspricht einem mehrfachen seitlichen Überschlag bei einem Unfall. Beim Herunterrollen entlang der Gefällestrecke 76 gelangt das Rollgestell 22 auf die Rampe 80. Es wird angehoben und fällt dann plötzlich wieder nach unten. Hierdurch wird ein seitliches Überschlagen wirklichkeitsnah simuliert. In der Praxis läuft ein seitliches Überschlagen auch nicht gleichmäßig, sondern mit Stößen in vielen Richtungen ab.

Zum Auslösen einer Drehung des inneren Drehkranzes 26 mit dem in ihm gehaltenen Kraffahrzeug 30 kann es ausreichen, das Gewicht 48 aus seiner mittleren Stellung am Führungsrahmen 46 zu lösen und in seine eine oder andere Endstellung zu schieben. Hierdurch gelangt der vorher austarierte innere Drehkranz 26 aus seinem stabilen Gleichgewicht und beginnt sich gegenüber dem äußeren Drehkranz 28 zu drehen.

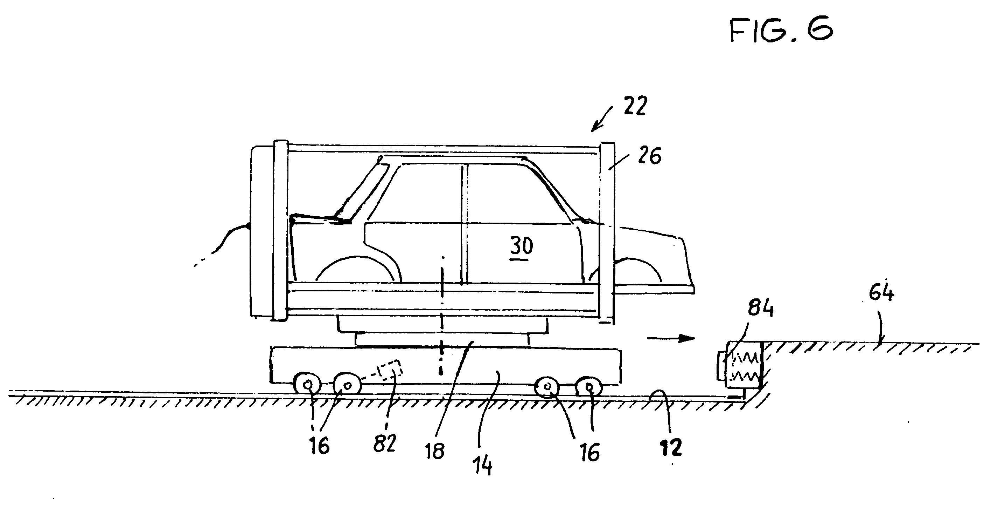

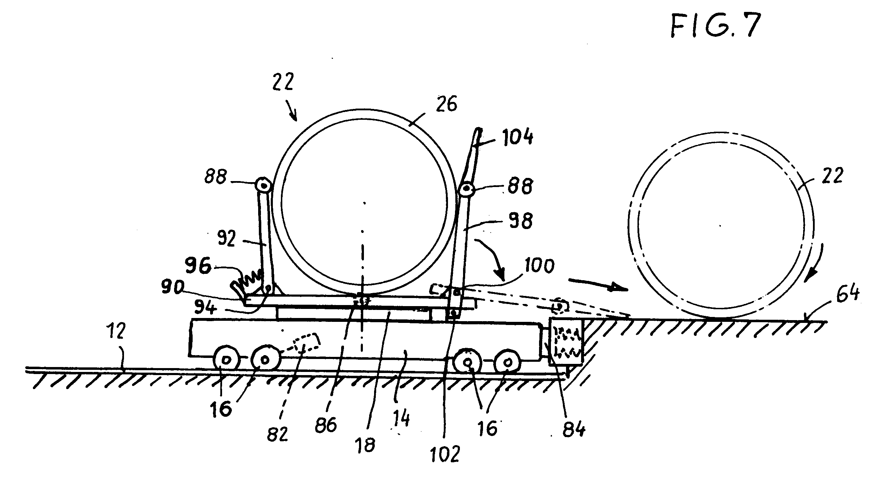

Bei der Ausführungsform nach Fig. 6 ist im Fahrschemel 14 ein Motor 82 zum Antrieb der Räder 16 angeordnet. Ein Motor 82 ist schematisch dargestellt. Der Fahrschemel 14 kann mehrere Motoren und auch mit diesen verbundene Getriebe enthalten. Am Ende des Schienenstranges 12 befindet sich eine Anhöhe 64. Diese liegt in etwa auf der Höhe der Drehscheibe 18. An ihrer dem Schienenstrang 12 zugekehrten Stirnseite ist ein Prellbock 84 angeordnet. Bei einer Fahrt des Fahrschemels 14 zusammen mit dem Rollgestell 22 in Richtung des eingezeichneten Pfeiles stößt der Fahrschemel 14 auf den Prellbock 84. Sofern sich das Rollgestell 22 an dieser Stelle vom Fahrschemel 14 lösen kann, wird es infolge der in ihm gespeicherten kinetischen Energie die Bewegung fortsetzen und auf die Anhöhe 64 auflaufen. Dies wird im folgenden unter Bezug auf die Figuren 7 bis 10 erläutert.

Bei der in diesen Figuren gezeigten Ausführungsform enthält das Rollgestell 22 nur den inneren Drehkranz 26. Der äußere Drehkranz 28 ist entfallen. Zu dessen Ersatz sind untere Laufrollen 86 und seitliche Laufrollen 88 vorgesehen. Die unteren Laufrollen 86 sind in einer Platte 90 gelagert und stehen etwas über diese über. Die Platte 90 ist auf der Drehscheibe 18 befestigt. Eine oder mehrere seitliche Laufrollen 88 sind an den freien Enden von einem oder mehreren Stützhebeln 92 gelagert. Diese sind in Drehpunkten 94 verschwenkbar auf der Platte 90 angeordnet. Federn 96 drücken die Stützhebel 92 in Richtung auf den inneren Drehkranz 26. An der anderen, in Fig. 7 rechts liegenden Seite des inneren Drehkranzes 26 befinden sich ein oder mehrere Stützhebel 98. Diese sind in Drehpunkten 100 verschwenkbar an der Platte 90 befestigt. Die Stützhebel 98 weisen einen Feststeller 102 und eine Verlängerung 104 auf. Mit dem Feststeller 102 werden sie in ihrer in Fig. 7 gezeigten Stellung verriegelt. In der gezeigten Stellung der Stützhebel 92 und 98 liegen diese am inneren Drehkranz 26 an und halten diesen auf der Platte 90. In seiner in Fig. 7 gezeigten Stellung ist der Drehkranz 26 um 90° gegenüber seiner in Fig. 6 gezeigten Stellung verdreht. Im folgenden wird diese Drehung erläutert. Bei Anstoßen des Fahrschemels 14 am Prellbock 84 wird der Feststeller 102 gelöst. Der Stützhebel 98 oder die Stützhebel 98 werden nach Lösen der Feststeller 102 in Richtung des eingezeichneten Pfeiles in ihre in strichpunktierten Linien eingezeichnete Stellung geschwenkt. Die Verlängerungen 104 liegen auf der Anhöhe 64 auf. Infolge der in ihm gespeicherten kinetischen Energie rollt das Rollgestell 22 bzw. rollen die inneren Drehkränze 26 mit dem in ihnen aufgehängten Kraftfahrzeug 30 in Richtung des eingezeichneten Pfeiles über die Stützhebel 98 und deren Verlängerungen 104 auf die Anhöhe 64. Abhängig von der Geschwindigkeit des Fahrschemels 14 beim Auftreffen auf den Prellbock 84 werden sie eine gewisse Strecke auf der Anhöhe 64 weiterrollen. Dies ist in strichpunktierten Linien angedeutet. Mit der in den Figuren 6 und 7 gezeigten Ausführungsform erleben die Insassen des Kraftfahrzeuges 30 damit eine Drehung um die Hochachse um 90°, ein plötzliches Anhalten am Prellbock 84 und das anschließende Abkippen des Kraftfahrzeuges 30 und dessen Weiterrollen in den inneren Drehkränzen 26 auf der Anhöhe 64. Zusätzlich kann das Kraftfahrzeug 30 zuvor noch um seine horizontale Längsachse gedreht werden. Hierzu dient ein noch im folgenden zu erläuternder Antrieb.

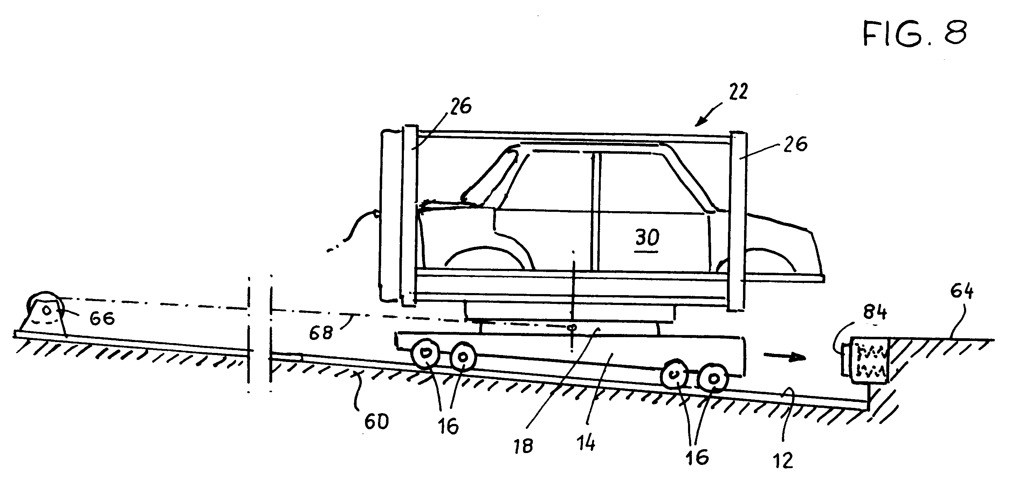

Bei der in den Figuren 8 bis 10 gezeigten Ausführungsform hat der Schienenstrang 12 ein Gefälle in Richtung auf die Anhöhe 64. Weiter ist der Fahrschemel 14 über einen Seilzug 68 mit der Seilwinde 66 verbunden. Wegen des Gefälles des Schienenstranges 12 kann der Motor 82 entfallen. Infolge des Gefälles fährt der Fahrschemel 14 von selbst in Richtung des in Fig. 8 eingezeichneten Pfeiles auf den Prellbock 84 auf.

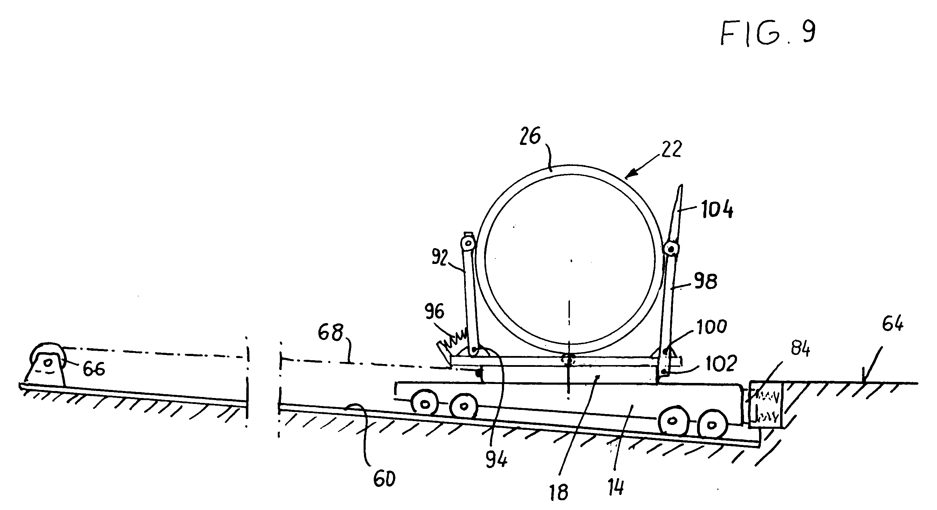

Mit der Seilwinde 66 und dem Seilzug 68 wird er anschließend auf den höchsten Punkt des Schienenstranges 12 zurückgezogen. Fig. 8 zeigt den Fahrschemel 14 während der Fahrt entlang des Schienenstranges 12 in Richtung auf den Prellbock 84. Fig. 9 zeigt den Fahrschemel 14 nach dem Drehen der Drehscheibe 18 und damit des Rollgestells 22 um 90° nach dem Anstoßen an den Prellbock 84. Wie bei der in Fig. 7 gezeigten Ausführungsform wird der Stützhebel 98 herunterklappen und sich mit seiner Verlängerung 104 auf die Anhöhe 64 auflegen. Infolge der in ihm gespeicherten kinetischen Energie löst sich das Rollgestell 22 vom Fahrschemel 14, läuft auf die Anhöhe 64 auf und rollt dort eine Strecke.

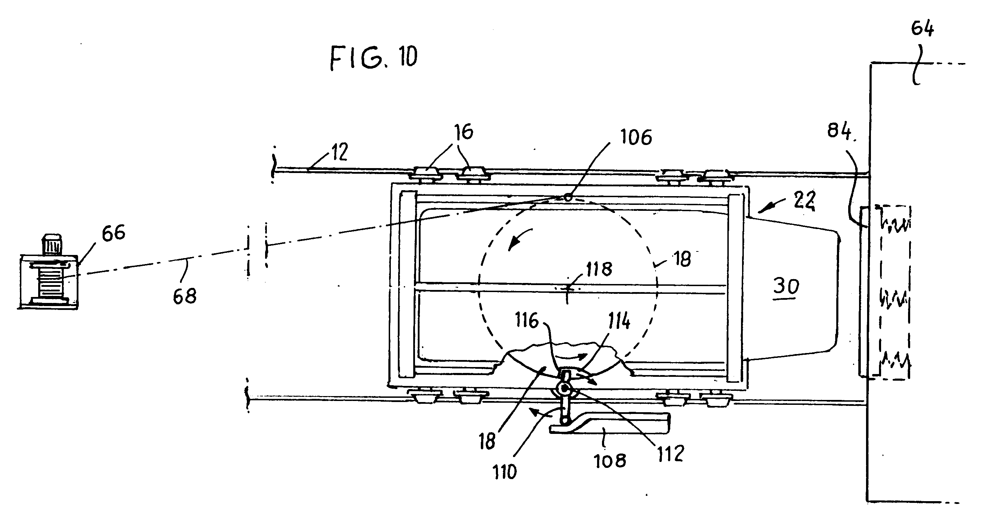

Fig. 10 zeigt die Einrichtungen zum Drehen der Rollgestells 22 und damit des Kraftfahrzeugs 30 um 90° um dessen Hochachse vor dem Auftreffen auf den Prellbock 84. Der Seilzug 68 ist bei 106 exzentrisch an der Drehscheibe 18 befestigt. Seitlich vom Schienenstrang 12 ist eine Auslösevorrichtung 108 angeordnet. Eine am Fahrschemel 14 befestigte Sperrklaue 110 wirkt mit dieser zusammen. Die Sperrklaue 110 ist um eine Drehachse 112 drehbar. Mit ihrem einen Ende greift sie in eine Aussparung 114 der Drehscheibe 18 und liegt dort an einer Anschlagfläche 116 an. Die Drehscheibe 18 ist um eine Achse 118 drehbar. Die Auslösevorrichtung 108 ist in einem solchen Abstand vom Prellbock 84 angeordnet, daß sie die Drehung des Rollgestells so einleitet und diese so zum Abschluß kommt, daß sich das Rollgestell 22 vor dem Auftreffen des Fahrschemels 14 am Prellbock 84 um 90° gedreht hat. Fig. 10 zeigt den Beginn der Drehung. Die am Fahrschemel 14 befestigte Sperrklaue 110 läuft auf die Auslösevorrichtung 108 auf. Ihr an dieser anliegendes Ende wird in Uhrzeigerrichtung gedreht. Die Pfeile zeigen die Drehbewegung der Sperrklaue 110. Damit löst sich ihr anderes Ende von der Anschlagfläche 116. Bis zu diesem Zeitpunkt wurde es durch eine Feder an die Anschlagfläche 116 angedrückt. Nach Lösen der Sperrklaue 110 von der Anschlagfläche 116 kommt der bei 106 exzentrisch an der Drehscheibe 18 angreifende Seilzug 68 zur Wirkung. Die Seilwinde 66 wird an dieser Stelle angehalten. Bei Weiterlauf des Fahrschemels 14 entlang des Schienenstranges 12 wird er durch den Seilzug 68 in Richtung des eingezeichneten Pfeiles in Gegenuhrzeigerrichtung gedreht. Nach einer Drehung um 90° schlägt der Fahrschemel 14 am Prellbock 84 an. Das Rollgestell 22 weist nun die in Fig. 9 gezeigte Lage auf. Der Stützhebel 98 wird heruntergeklappt. Das Rollgestell 22 läuft über diesen auf die Anhöhe 64.

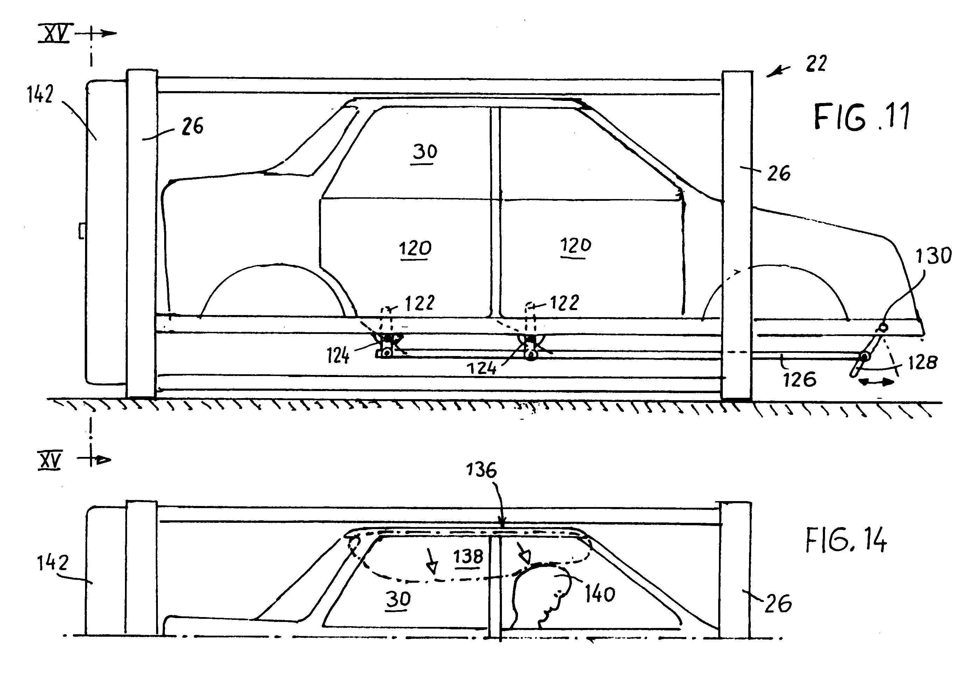

Beim Drehen des Kraftfahrzeugs 30 im Rollgestell 22 um seine verschiedenen Achsen können sich seine Türen öffnen. Die für den normalen Fahrbetrieb ausgelegten Türschlösser können die beim erfindungsgemäßen Simulieren von Winkelbeschleunigungen auftretenden Kräfte häufig nicht auffangen. Die Türen springen dann auf. Mit der in Fig. 11 gezeigten Ausführungsform wird dies verhindert. An den Türen 120 des Kraftfahrzeugs 30 liegen Hebel 122 von außen an. Diese sind an den Längsstreben des Rollgestells 22 bei 124 verschwenkbar gelagert. Weiter sind sie an eine Stellstange 126 angelenkt. An ihrem einen Ende ist diese mit einem Betätigungshebel 128 verbunden. Dieser ist bei 130 verschwenkbar an einer Längsstrebe des Rollgestells 22 gelagert. Bei Schwenken des Betätigungshebels 28 in Richtung des Doppelpfeiles in der einen oder der anderen Richtung werden die Hebel 122 von außen vor die Türen 120 geschwenkt oder von diesen weg bewegt. Fig. 11 zeigt in strichpunktierten Linien beide Lagen der beiden Hebel 122. Sie sind auf beiden Seiten des Kraftfahrzeugs 30 vorgesehen.

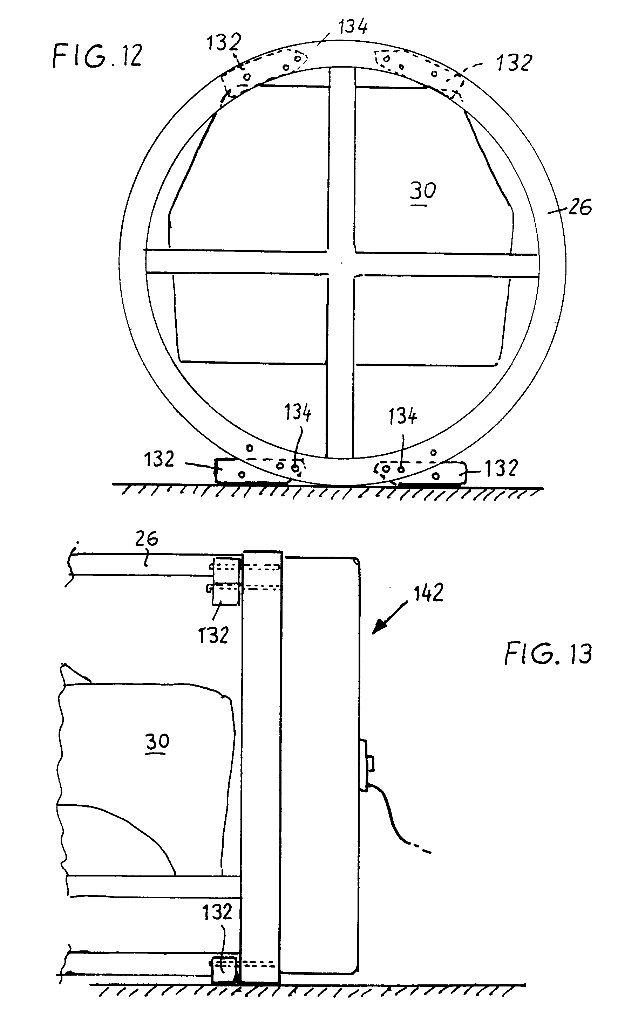

Unter Bezug auf zum Beispiel die Figuren 6 bis 10 wurde erläutert, daß der innere Drehkranz 26 mit dem eingehängten Kraftfahrzeug 30 und dessen Insassen über die Anhöhe 64 rollt. Irgendwann endet diese Rollbewegung. An dieser Stelle wird der Trainer mit den Insassen des Kraftfahrzeugs sprechen, sie loben, auf Fehler hinweisen usw. Dabei sollen sich der innere Drehkranz 26 und das Kraftfahrzeug 30 in einer stabilen aufrechten Lage befinden. Hierzu dient die in den Figuren 12 und 13 gezeigte Ausführungsform. Mehrere Keile 132 sind an Drehachsen 134 am inneren Drehkranz 26 gelagert.

Fig. 12 zeigt in strichlierten Linien zwei eingeschwenkte und in ausgezogenen Linien zwei ausgeschwenkte Keile 132. Bei eingeschwenkten Keilen 132 kann der innere Drehkranz 26 unbehindert auf einer Ebene rollen. Bei ausgeschwenkten Keilen 132 wird er in einer aufrechten Lage arretiert.

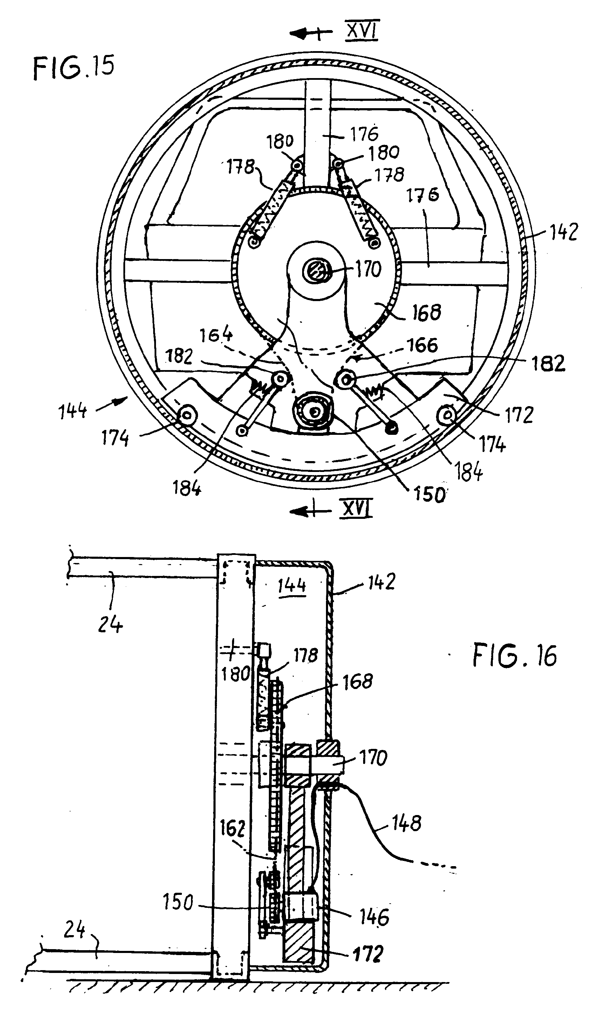

Fig. 14 zeigt eine Ausführungsform zum Vortäuschen eines eingedrückten Fahrzeugdaches. Unter dem Fahrzeugdach 136 ist ein aufblasbarer Luftsack 138 angeordnet. Dieser wird mit einer Preßluftflasche aufgeblasen. Dabei dehnt er sich in Richtung der eingezeichneten Pfeile und drückt auf den Kopf 140 des Probanden. Zweckmäßig wird der Luftsack 138 in Dachlage des Rollgestells 26 aufgeblasen. Dann erhält der im Kraftfahrzeug 30 angeschnallte und mit seinem Kopf 140 nach unten hängende Proband wirklichkeitsnah den Eindruck, daß sein Kraftfahrzeug mit dem Dach über eine Straße rutscht und dieses dabei eingedrückt wird.

Bei vielen Unfallsimulationen dreht sich das in das Rollgestell 22 eingehängte Kraftfahrzeug 30 um seine Längsmittelachse. Es kann von Hand oder auch motorisch gedreht werden. Zur Drehung mit einem Motor dient die in den Figuren 15 und 16 gezeigte Ausführungsform. An einer Stirnseite des Rollgestells ist ein Gehäuse 142 angebracht. Verwiesen sei zum Beispiel auf die Figuren 11, 13 und 14. In diesem Gehäuse 142 befindet sich ein Antrieb 144. Zu diesem gehören ein Motor 146 mit einer elektrischen Zuleitung 148 und einem Ritzel 150. Dieses sitzt auf der Abtriebswelle des Motors 146. Das Ritzel treibt eine Zahnkette 162 an. Diese weist einen linken und einen rechten Kettenstrang 164 und 166 auf. Diese laufen auf ein Zahnrad 168 auf. Anders ausgedrückt treibt das Ritzel 150 das Zahnrad 168 über die Zahnkette 162 an. Das Zahnrad 168 ist mit einer Achse 170 im Rollgestell 22 gelagert. Auf der Achse 170 sitzt weiter noch ein Exzenter 172. Dieser ist mit Rollen 174 an der Innenwand des Gehäuses 142 geführt. Streben 176 verlaufen im inneren Drehkranz 26. Stoßdämpfer 178 sind zwischen dem Zahnrad 168 und einer dieser Streben 176 eingespannt. An dieser sind sie bei 180 befestigt. Kettenspanner 182 liegen zwischen den Kettensträngen 164 und 166 auf der einen und dem Exzenter 172 auf der anderen Seite. Federn 184 drücken die Kettenspanner 182 gegen die Kettenstränge 164 und 166.

Bei Einschalten des Motors 146 dreht sich das Ritzel 150 um das Zahnrad 168. Dabei nimmt es den Exzenter 172 mit. Das Rollgestell 22 wird durch zwischen ihm und dem Boden eingeklemmte Keile an einer Drehung gehindert. Der Motor 146 bleibt solange eingeschaltet, bis der Exzenter 172 die gewünschte Höhe erreicht hat. Die Keile werden weggezogen. Nun kommt das Gewicht des Exzenters 172 zur Wirkung. Er will seine stabile Lage erreichen und schwenkt nach unten. Dabei nimmt er das Ritzel 150 mit. Dieses wirkt über die Zahnkette 162 auf das Zahnrad 168. Dessen Bewegung wird über die Stoßdämpfer 178 elastisch auf eine Querstrebe 176 und damit auf das Rollgestell übertragen. Dies wird in Drehung versetzt. Auch eine Schaukelbewegung kann eingeleitet werden. Beim Hin- und Herschaukeln werden die beiden Kettenstränge 164 und 166 abwechselnd gespannt und entlastet. Dieses Spannen und Entspannen der Kettenstränge wird mit den Kettenspannern 182 gedämpft. Das heißt, daß das Rollgestell 22 mit dem eingehängten Kraftfahrzeug 30 eine gedämpfte Drehbewegung oder gedämpfte Schaukelbewegungen ausführt.

## Patentansprüche

1. Anlage zum Simulieren von Winkelbeschleunigungen und dergleichen für die Insassen eines Kraftfahrzeuges (30) mit einem Rollgestell (22) zur Aufnahme und Halterung des Kraftfahrzeuges (30) und zu dessen Drehung um die Längsachse, dadurch gekennzeichnet, daß das Rollgestell (22) an seinen beiden Enden je einen inneren und einen äußeren Drehkranz (26, 28) aufweist, die gegeneinander verdrehbar sind, das Kraftfahrzeug (30) im inneren Drehkranz (26) aufnehm- und befestigbar ist und das Rollgestell (22) auf einem Schienenstrang (12) verfahrbar ist.

2. Anlage nach Anspruch 1, dadurch gekennzeichnet, daß sie einen auf dem Schienenstrang (12) verfahrbaren Fahrschemel (14) enthält, auf dem Fahrschemel (14) eine Drehscheibe (18) angeordnet und das Rollgestell (22) auf der Drehscheibe (18) gehalten ist.

3. Anlage nach Anspruch 1 oder 2, dadurch gekennzeichnet, daß auf der Drehscheibe (18) Querführungen (20) angeordnet sind und das Rollgestell (22) mit Querschlitten (40) in den Querführungen (20) verschiebbar gehalten ist.

4. Anlage nach Anspruch 1, dadurch gekennzeichnet, daß das Kraftfahrzeug (30) mit Federn (32) im inneren Drehkranz (26) aufhängbar ist.

5. Anlage nach einem oder mehreren der Ansprüche 1 bis 4, dadurch gekennzeichnet, daß das Rollgestell (22) zwischen den Drehkränzen (26, 28) verlaufende Längsstreben (24) aufweist.

6. Anlage nach einem oder mehreren der Ansprüche 1 bis 5, dadurch gekennzeichnet, daß parallel zu den Längsstreben (24) unterhalb des aufgehängten Kraftfahrzeuges (30) eine Längsführung (34) verläuft und ein Gewicht (36) an dieser verschieb- und feststellbar geführt ist.

7. Anlage nach einem oder mehreren der Ansprüche 1 bis 6, dadurch gekennzeichnet, daß parallel zu den Querführungen (20) unterhalb des aufgehängten Kraftfahrzeuges (30) eine Querführung (42) verläuft, am inneren Drehkranz (26) befestigt und ein Gewicht (44) verschieb- und feststellbar an der Querführung (42) geführt ist.

8. Anlage nach einem oder mehreren der Ansprüche 1 bis 7, dadurch gekennzeichnet, daß eine Vertikalführung (56) an einer Stirnseite des Rollgestells (22) verläuft, am inneren Drehkranz (26) befestigt und ein Gewicht (58) verschieb- und feststellbar an der Vertikalführung (56) geführt ist.

9. Anlage nach einem oder mehreren der Ansprüche 1 bis 8, dadurch gekennzeichnet, daß ein Führungsrahmen (46) oberhalb des aufgehängten Kraftfahrzeuges (30) am inneren Drehkranz (26) befestigt und ein Gewicht (48) verschieb- und feststellbar am Führungsrahmen (46) geführt ist.

10. Anlage nach Anspruch 9, dadurch gekennzeichnet, daß in den beiden Endstellungen der Bewegung des Gewichtes (48) am Führungsrahmen (46) Puffer (54) vorgesehen sind.

11. Anlage nach Anspruch 9, dadurch gekennzeichnet, daß am Führungsrahmen (46) eine Mittenarretierung (52) für das Gewicht (48) vorgesehen ist.

12. Anlage nach Anspruch 1, dadurch gekennzeichnet, daß der Schienenstrang (12) ein Kurvenstück enthält.

13. Anlage nach einem oder mehreren der Ansprüche 1 bis 12, gekennzeichnet durch eine Anhöhe (64) mit einem von dieser ausgehenden Ablaufberg (60) und einer sich an diesen anschließenden Plattform (70), mit von zwei Seiten der Plattform (52) unter rechten Winkeln zu dem Ablaufberg (60) ausgehenden Gefällestrecken (74, 76) und mit auf dem Ablaufberg (60) und den Gefällestrecken (74, 76) angeordneten Schienen (62,78), auf denen der Fahrschemel (14) verfahrbar beziehungsweise das Rollgestell (22) rollbar ist.

14. Anlage nach Anspruch 13, gekennzeichnet durch eine auf der Anhöhe (64) angeordnete Seilwinde (66) mit einem Seilzug (68), an dem das Rollgestell (22) beziehungsweise der Fahrschemel (14) befestigt sind.

15. Anlage nach Anspruch 13, gekennzeichnet durch eine auf einer Gefällestrecke (76) angeordnete Rampe (80).

16. Anlage nach einem oder mehreren der Ansprüche 1 bis 12, dadurch gekennzeichnet, daß am Ende des Schienenstranges (12) ein Prellbock (84) und hinter diesem in der Verlängerung des Schienenstranges (12) auf der Höhenlage der Drehscheibe (18) eine Anhöhe (64) angeordnet und das Rollgestell (22) von der Drehscheibe (18) lösbar ist, so daß dieses nach dem Auftreffen des Fahrschemels (14) sich von diesem löst und auf der Anhöhe rollt.

17. Anlage nach Anspruch 16, dadurch gekennzeichnet, daß auf der Drehscheibe (18) eine Platte (90) zur Auflagerung des inneren Drehkranzes (26) und an deren Seiten Stützhebel (92, 98) zu dessen Fixierung auf der Platte (90) verschwenkbar angelenkt sind.

18. Anlage nach Anspruch 16 oder 17, gekennzeichnet durch an der Platte (90) und an der Innenseite der Stützhebel (92, 98) angebrachte Laufrollen (86, 88) zur Anlage an dem eingelegten Rollgestell (22).

19. Anlage nach Anspruch 17 oder 18, dadurch gekennzeichnet, daß der eine Stützhebel (92) unter dem Druck einer ihn gegen das Rollgestell drückenden Feder (96) steht, der andere Stützhebel (98) feststellbar ist und an seinem freien Ende eine Verlängerung (104) aufweist.

20. Anlage nach einem oder mehreren der Ansprüche 1 bis 19, gekennzeichnet durch eine am Schienenstrang (12) angeordnete Einrichtung (108, 110, 112) zum automatischen Drehen der Drehscheibe (18) bei Vorbeilauf des Fahrschemels (14).

21. Anlage nach Anspruch 20, dadurch gekennzeichnet, daß seitlich des Schienenstranges (12) eine Auslösevorrichtung (108) ortsfest und am Fahrschemel (14) eine mit dieser zusammenwirkende Sperrklaue (110) drehbar angeordnet ist, in der Drehscheibe (18) eine Aussparung (114) mit einer Anschlagfläche (116) zur Anlage der Sperrklaue (118) ausgebildet und der Seilzug (68) außermittig an der Drehscheibe (18) derart befestigt ist, daß beim Vorbeilauf des Fahrschemels (14) an der Auslösevorrichtung (108) diese die Sperrklaue (110) aus der Aussparung (114) und von der Anschlagfläche (116) löst und der Seilzug (68) die Drehscheibe (18) mit dem auf dieser befindlichen Rollgestell (22) um 90° dreht.

22. Anlage nach einem oder mehreren der Ansprüche 1 bis 21, gekennzeichnet durch am Rollgestell (22) schwenkbar gelagerte Hebel (122), die in einer Ruhestellung die Türen (120) des Kraftfahrzeuges (30) zum Öffnen freigeben und in einer Betriebsstellung vor diese geschwenkt sind, und eine am Rollgestell (22) verschiebbar geführte und mit den Hebeln verbundene Stellstange (126) zu deren Schwenken in die eine oder die andere Stellung.

23. Anlage nach einem oder mehreren der Ansprüche 1 bis 22, gekennzeichnet durch am inneren Drehkranz (26) schwenk- und feststellbar angebrachte Keile (132), die den inneren Drehkranz (26) in eingeschwenkter Stellung zum Rollen freigeben und in ausgeschwenkter Stellung am Rollen hindern.

24. Anlage nach einem oder mehreren der Ansprüche 1 bis 23, gekennzeichnet durch einen unter dem Dach (136) des Kraftfahrzeuges (30) angebrachten aufblasbaren Luftsack (138).

25. Anlage nach einem oder mehreren der Ansprüche 1 bis 24 mit einem im Rollgestell (22) exzentrisch gelagerten Gewicht (172) und mit einem motorischen Antrieb (146, 150, 162) zum Verschwenken des Gewichtes (172), dadurch gekennzeichnet, daß das Ritzel (150) des Motors (146) über Kettenstränge (164, 166) mit einem Zahnrad (168) gekuppelt ist, die Kettenstränge (164, 166) durch Kettenspanner (182) elastisch vorgespannt sind und das Zahnrad (168) über Stoßdämpfer (178) mit dem Rollgestell (22) verbunden ist.

## Claims

1. An installation for simulating angular accelerations and the like for the occupants of a motor vehicle (30) having a rolling support (22) for accommodating and holding the motor vehicle (30) and rotating it about the longitudinal axis characterised in that at each of its two ends the rolling support (22) has an inner and an outer rotary ring mount (26, 28) which are rotatable relative to each other, the motor vehicle (30) can be accommodated and fixed in the inner rotary ring mount (26) and the rolling support (22) is movable on a rail track (12).

2. An installation according to claim 1 characterised in that it includes a bogie (14) which is displaceable on the rail track (12), a turntable (18) is arranged on the bogie (14) and the rolling support (22) is mounted on the turntable (18).

3. An installation according to claim 1 or claim 2 characterised in that transverse guides (20) are arranged on the turntable (18) and the rolling support (22) is carried displaceably with transverse sliders (40) in the transverse guides (20).

4. An installation according to claim 1 characterised in that the motor vehicle (30) can be suspended with springs (32) in the inner rotary ring mount (26).

5. An installation according to one or more of claims 1 to 4 characterised in that the rolling support (22) has longitudinal struts (24) extending between the rotary ring mounts (26, 28).

6. An installation according to one or more of claims 1 to 5 characterised in that a longitudinal guide (34) extends parallel to the longitudinal struts (24) beneath the suspended motor vehicle (30) and a weight (36) is guided displaceably and lockably on the longitudinal guide (34).

7. An installation according to one or more of claims 1 to 6 characterised in that a transverse guide (42) extends parallel to the transverse guides (20) beneath the suspended motor vehicle (30) and is fixed to the inner rotary ring mount (26) and a weight (44) is guided displaceably and lockably on the transverse guide (42).

8. An installation according to one or more of claims 1 to 7 characterised in that a vertical guide (56) extends at one end of the rolling support (22) and is fixed to the inner rotary ring mount (26) and a weight (58) is guided displaceably and lockably on the vertical guide (56).

9. An installation according to one or more of claims 1 to 8 characterised in that a guide frame (46) is fixed to the inner rotary ring mount (26) above the suspended motor vehicle (30) and a weight (48) is guided displaceably and lockably on the guide frame (46).

10. An installation according to claim 9 characterised in that buffers (54) are provided in the two limit positions of the movement of the weight (48) on the guide frame (46).

11. An installation according to claim 9 characterised in that a central arresting means (52) for the weight (48) is provided on the guide frame (46).

12. An installation according to claim 1 characterised in that the rail track (12) includes a bend portion.

13. An installation according to one or more of claims 1 to 12 characterised by an elevated part (64) with a launching incline (60) extending therefrom and with a platform (70) adjoining the launching incline, with downhill slope sections (74, 76) extending from two sides of the platform (70) at right angles to the launching incline (60), and with rails (62, 78) which are disposed on the launching incline (60) and the downhill slope sections (74, 76) and on which the bogie (14) is movable or the rolling support (22) can be rolled.

14. An installation according to claim 13 characterised by a cable winch (66) arranged on the elevated part (64) and having a cable line (68) to which the rolling support (22) or the bogie (14) are fixed.

15. An installation according to claim 13 characterised by a ramp (80) arranged on a downhill slope section (76).

16. An installation according to one or more of claims 1 to 12 characterised in that a buffer stop (84) is arranged at the end of the rail track (12) and an elevated part (64) is arranged behind the buffer stop in line with the rail track (12) at the level of the turntable (18) and the rolling support (22) is releasable from the turntable (18) so that after the bogie (14) hits the buffer stop the rolling support (22) is released from the bogie and rolls on the elevated part.

17. An installation according to claim 16 characterised in that a plate (90) for supporting the inner rotary ring mount (26) is arranged on the turntable (18) and support levers (92, 98) for fixing the inner rotary ring mount on the plate (90) are pivotably connected to the sides of the plate.

18. An installation according to claim 16 or claim 17 characterised by rollers (86, 88) mounted on the plate (90) and at the inside of the support levers (92, 98) for bearing against the inserted rolling support (22).

19. An installation according to claim 17 or claim 18 characterised in that the one support lever (92) is subjected to the pressure of a spring (96) urging it towards the rolling support, and the other support lever (98) can be locked and at its free end has an extension portion (104).

20. An installation according to one or more of claims 1 to 19 characterised by a device (108, 110, 112) arranged on the rail track (12) for automatically rotating the turntable (18) when the bogie (14) passes.

21. An installation according to claim 20 characterised in that a triggering means (108) is arranged stationarily laterally of the rail track (12) and a locking pawl (110) which co-operates with the triggering means is arranged rotatably on the bogie (14), an opening (114) with an abutment surface (116) for contact with the locking pawl (118) is provided in the turntable (18) and the cable line (68) is fixed eccentrically to the turntable (18) in such a way that when the bogie (14) moves past the triggering means (108) the triggering means releases the locking pawl (110) from the recess (114) and from the abutment surface (116) and the cable line (68) turns the turntable (18) with the rolling support (22) disposed thereon through 90°.

22. An installation according to one or more of claims 1 to 21 characterised by levers (122) which are mounted pivotably on the rolling support (22) and which in a rest position release the doors (120) of the motor vehicle (30) for opening thereof and which in an operative position are pivoted in front of said doors, and a control bar (126) which is guided displaceably on the rolling support (22) and which is connected to the levers for pivotable movement thereof into one position or the other.

23. An installation according to one or more of claims 1 to 22 characterised by wedge members (132) which are mounted pivotably and lockably on the inner rotary ring mount (26) and which in an inwardly pivoted position release the inner rotary ring mount (26) for rolling movement thereof and in an outwardly pivoted position prevent it from rolling.

24. An installation according to one or more of claims 1 to 23 characterised by an inflatable air bag (138) disposed beneath the roof (136) of the motor vehicle (30).

25. An installation according to one or more of claims 1 to 24 having a weight (172) mounted eccentrically in the rolling support (22) and a motor drive (146, 150, 162) for pivoting the weight (172), characterised in that the sprocket (150) of the motor (146) is coupled to a gear (168) by way of chain lines (164, 166), the chain lines (164, 166) are elastically prestressed by chain tensioners (182) and the gear (168) is connected to the rolling support (22) by way of shock absorbers (178).

## Revendications

1. Installation pour la simulation des accélérations angulaires et similaires affectant les passagers d'un véhicule automobile (30), comportant un bâti roulant (22) destiné à loger et maintenir le véhicule (30) et à permettre sa rotation autour de l'axe longitudinal, caractérisée en ce que le bâti roulant (22) présente, à ses deux extrémités, des couronnes de rotation intérieure et extérieure (26, 28) qui peuvent tourner l'une par rapport à l'autre, le véhicule (30) peut être logé et fixé dans la couronne de rotation intérieure (26) et le bâti roulant (22) peut se déplacer sur une section de voie (12).

2. Installation suivant la revendication 1, caractérisée en ce qu'elle comprend un chariot (14) qui peut se déplacer sur la section de voie (12), une plaque tournante (18) disposée sur le chariot (14) et le bâti roulant (22) maintenu sur la plaque tournante (18).

3. Installation suivant la revendication 1 ou 2, caractérisée en ce que des glissières transversales (20) sont disposées sur la plaque tournante (18) et le bâti roulant (22) est maintenu à coulissement dans les glissières transversales (20) au moyen de coulisseaux (40).

4. Installation suivant la revendication 1, caractérisée en ce que le véhicule (30) peut être suspendu au moyen de ressorts (32) dans la couronne de rotation intérieure (26).

5. Installation suivant l'une quelconque des revendications 1 à 4, caractérisée en ce que le bâti roulant (22) présente des entretoises longitudinales (24) s'étendant entre les couronnes de rotation (26, 28).

6. Installation suivant l'une quelconque des revendications 1 à 5, caractérisée en ce qu'une glissière longitudinale (34), s'étend en dessous du véhicule suspendu (30), parallèlement aux entretoises longitudinales (24) et un poids (36) est guidé à coulissement sur cette glissière et peut être bloqué sur celle-ci.

7. Installation suivant l'une quelconque des revendications 1 à 6, caractérisée en ce qu'une glissière transversale (42) s'étend en dessous du véhicule suspendu (30), parallèlement aux glissières transversales (20) et est fixée à la couronne de rotation intérieure (26) et un poids (44) est guidé à coulissement sur cette glissière transversale (42) et peut être bloqué sur celle-ci.

8. Installation suivant l'une quelconque des revendications 1 à 7, caractérisée en ce qu'une glissière verticale (56) s'étend sur une face d'about du bâti roulant (22) fixée à la couronne de rotation intérieure (26), et un poids (58) est guidé à coulissement sur la glissière verticale (56) et peut être bloqué sur celle-ci.

9. Installation suivant l'une quelconque des revendications 1 à 8, caractérisée en ce qu'un cadre de guidage (46) est fixé à la couronne de rotation intérieure (26), au-dessus du véhicule suspendu (30), et un poids (48) est guidé à coulissement sur le cadre de guidage (46) et peut être bloqué sur celui-ci.

10. Installation suivant la revendication 9, caractérisée en ce que des tampons (54) sont prévus aux deux positions extrêmes du mouvement du poids (48) sur le cadre de guidage (46).

11. Installation suivant la revendication 9, caractérisée en ce qu'un dispositif d'arrêt en position médiane (52) pour le poids (48) est prévu sur le cadre de guidage (46).

12. Installation suivant la revendication 1, caractérisée en ce que la section de voie (12) contient une partie courbe.

13. Installation suivant l'une quelconque des revendications 1 à 12, caractérisée par une élévation (64) avec, au départ de celle-ci, une rampe de démarrage (60) suivie d'une plate-forme (70), avec des pentes (74, 76) partant de deux côtés de la plate-forme (70), à angle droit par rapport à la rampe de démarrage (60), et avec des rails (62, 78) posés sur la rampe de démarrage (60) et les pentes (74, 76), rails sur lesquels le chariot (14) peut se déplacer ou le bâti roulant (22) peut rouler.

14. Installation suivant la revendication 13, caractérisée par un treuil à câble (66) installé sur l'élévation (64) avec un câble (68) auquel est attaché le bâti roulant (22) ou le chariot (14).

15. Installation suivant la revendication 13, caractérisée par une rampe (80) disposée sur une pente (76).

16. Installation suivant l'une quelconque des revendications 1 à 12, caractérisée en ce que, à l'extrémité de la section de voie (12), est disposé un butoir (84), et derrière celui-ci, dans le prolongement de la section de voie (12), à hauteur de la plaque tournante (18), se trouve une élévation (64) et le bâti roulant (22) peut être libéré de la plaque tournante (18), de sorte qu'après l'impact du chariot (14), le bâti roulant se détache du chariot et roule sur l'élévation.

17. Installation suivant la revendication 16, caractérisée en ce qu'une plaque (90) est prévue sur la plaque tournante (18) comme support de la couronne de rotation intérieure (26) et des leviers de support (92, 98) sont montés à pivotement sur les côtés de la plaque (90) pour la fixation de la couronne de rotation sur la plaque (90).

18. Installation suivant la revendication 16 ou 17, caractérisée par des galets de roulement (86, 88) disposés sur la plaque (90) et sur le côté intérieur des leviers de support (92, 98) pour venir s'appliquer contre le bâti roulant (22) mis en place.

19. Installation suivant la revendication 17 ou 18, caractérisée en ce qu'un premier levier de support (92) est soumis à la sollicitation d'un ressort (96) qui l'appuie contre le bâti roulant, l'autre levier de support (98) peut être bloqué et présente un prolongement (104) à son extrémité libre.

20. Installation suivant l'une quelconque des revendications 1 à 19, caractérisée par un dispositif (108, 110, 112) monté sur la section de voie (12) et destiné à faire tourner automatiquement la plaque tournante (18) lors du passage du chariot (14).

21. Installation suivant la revendication 20, caractérisée en ce qu'un dispositif de déclenchement (108) est monté fixe à côté de la section de voie (12) et une griffe d'arrêt (110) agissant de concert avec celui-ci, est montée à pivotement sur le chariot (14), un évidement (114) est ménagé dans la plaque tournante (18) avec une surface de butée (116) contre laquelle s'appuie la griffe d'arrêt (118), et le câble (68) est fixé excentriquement à la plaque tournante (18), de telle sorte que, lors du passage du chariot (14) au niveau du dispositif de déclenchement (108), ce dernier dégage la griffe d'arrêt (110) de l'évidement (114) et de la surface de butée (116) et le câble (68) fait tourner la plaque tournante (18), avec le bâti roulant (22) qui se trouve sur celle-ci, de 90°.

22. Installation suivant l'une quelconque des revendications 1 à 21, caractérisée par des leviers (122) montés à pivotement sur le bâti roulant (22), qui, dans une position de repos, permettent l'ouverture des portières (120) du véhicule (30), et, dans une position de fonctionnement, sont dressés par pivotement devant celles-ci, et par une tringle de commande (126) guidée à coulissement sur le bâti roulant (22) et reliée aux leviers afin de les faire pivoter dans l'une ou l'autre position.

23. Installation suivant l'une quelconque des revendications 1 à 22, caractérisée par des cales (132), qui sont montées sur la couronne de rotation intérieure (26), de manière à pouvoir pivoter et à pouvoir être bloquées et qui, dans la position de pivotement vers l'extérieur, permettent à la couronne de rotation intérieure de rouler et, dans la position de pivotement vers l'extérieur, empêchent la couronne de rotation intérieure de rouler.

24. Installation suivant l'une quelconque des revendications 1 à 23, caractérisée par un sac gonflable (138) disposé sous le toit (136) du véhicule (30).

25. Installation suivant l'une quelconque des revendications 1 à 24, comportant un poids (172) monté en rotation excentriquement dans le bâti roulant (22) et un mécanisme d'entraînement à moteur (146, 150, 162) destiné à faire tourner le poids (172), caractérisée en ce que le pignon (150) du moteur (146) est accouplé à une roue dentée (168) par l'intermédiaire de brins de chaînes (164, 166), les brins de chaînes (164, 166) sont tendus élastiquement au moyen d'un tendeur de chaîne (182) et la roue dentée (168) est reliée au bâti roulant (22) par l'intermédiaire d'amortisseurs (178).
